# EUROPEAN PATENT APPLICATION

(11) **EP 4 848 133 A1**
(43) Date of publication of application: **02.12.2026**
(21) Application number: 25179508.4
(22) Date of filing: 28.05.2025
(51) Int. Cl.: G06F 30/20, G06F 111/10, G06F 111/20

(54) **SYSTEM AND METHOD FOR GENERATING A DIGITAL SIMULATION MODEL OF A TECHNICAL INSTALLATION**

(71) Applicant: Siemens Aktiengesellschaft, 80333 München (DE)
(72) Inventor: Ananthamurthy, Chandramouli, 560078 Bengaluru (IN); Heinzerling, Till, 76297 Stutensee (DE); Leingang, Florian, 76131 Karlsruhe (DE); Mysore Nagaraja Rao, Nagesh, 560085 Bangalore, Karnataka (IN); Bhat, Anant, 560097 Bengaluru (IN); Stutz, Andreas, 76344 Eggenstein-Leopoldshafen (DE)
(74) Representative: Isarpatent

(57) **Abstract**

A computer-implemented method for generating a digital simulation model of a technical installation (104) is disclosed. A processing unit (202) receives input data, which includes modular package data (218) from one or more assets (102a-n), hardware configuration data (220) from a control system, and supplementary data from a database (206). The method involves processing the modular package data (218) to extract technical information and asset-level attributes, and processing the hardware configuration data (220) to identify signal assignments and control module interfaces for each asset (102a-n). Behavioral models for each asset are generated by retrieving templates from the database (206) and mapping the specific data to these templates. The behavioral models are integrated within a simulation platform (110), based on signal assignments, to form the digital simulation model of the technical installation (104). The output simulation model replicates the operational behavior of the assets (102a-n) within the technical installation.

## Description

The present disclosure relates to a system for generation of a digital simulation model of a technical installation, and more particularly relates to a method and system for generation of a digital simulation model of a technical installation based on modular packages data.

The integration of real and digital domains through digital twin technology has gained significant traction in process automation over the life cycle of process plants. Digital twins have become integral within the field, despite requiring substantial effort to develop behavioral and process models and maintain data. The adoption of modular systems in automation, driven by the Module Type Package (MTP) standards, has enhanced the relevance of these technologies. While MTP describes the architecture and communications for Process Equipment Assemblies (PEAs), it lacks simulation protocols, although device models add considerable value to module validation.

Currently, each Original Equipment Manufacturer (OEM) provides respective PEAs along with their control systems, necessitating manual integration on a unified simulation platform for creating digital twins, either for new plants, expansions, or operational efficiency improvement. Challenges in integrating simulation models from multiple OEMs include inconsistent provision and integrability of models, costly and time-consuming redesigns when errors in PEA design are identified, limited expertise at plant locations leading to reliance on OEM process knowledge, extensive engineering efforts required for simulation model design, and restricted evaluation options for OEMs using plug-and-produce methodologies.

Presently, simulation models for sensor and actuator behaviors are manually created, despite automation according to MTP. While model templates and customizations offer partial automation through table-based imports, they rely heavily on manual file imports or custom scripting.

In view of the foregoing, there is a need for a system and method for generation of a digital simulation model of a technical installation based on modular packages data.

The term "technical installation" refers to any industrial system, manufacturing system, or similar undertaking that involves the design, development, implementation, or optimization of technical and engineering solutions to address specific objectives. A technical installation may comprise assets including hardware equipment such as motors, robots, logical controllers, human machine interfaces, conveyor belts, and machine lathes. Further, the technical installation may comprise sensors and other sensory devices configured to measure operational parameters of the processes of the engineering project. As an example, a technical installation may be a cement manufacturing plant, glass manufacturing plant, so on and so forth.

The term "assets" may refer to any device, system, instrument, or machinery manufactured or used in an industry that may be employed for performing an operation. In some cases, assets may also include any devices or instruments deployed or functioning in a non-industrial environment such as buildings. Examples of assets include any machinery in the industrial site or technical installation/facility such as motors, circuit breakers, protection devices, remote terminal units, transformers, reactors, gear-drive, chillers, radio frequency coils, appliances, electronic devices, pumps, heat exchangers, cooling towers, air compressors, boilers, fluid bed driers, coating machines, carbonation towers etc.

The term "modular package data" may refer to a structured and uniform set of standardized technical configuration data that defines the functional aspects of industrial assets. This data is typically organized according to standardized formats, such as those defined in the Module Type Package (MTP), ensuring consistency and interoperability across different systems and devices. Examples of standardized technical configuration data include device-specific information, communication settings, including protocol configurations, input/output configurations, control logic, and data related to integration of the assets in the technical installation.

It is an object of the present invention to provide a method of generating a digital simulation model of a technical installation. The method comprises receiving input data by the processing unit. In one embodiment, the input data comprises modular package data associated with one or more assets of the technical installation, hardware configuration data defining the relationship between the assets, and supplementary data including at least operational data and technical data associated with the asset. The modular package data is obtained from one or more assets, the hardware configuration data is obtained from a control system configured to control the operations of the assets, and the supplementary data is obtained at least from a database.

In an embodiment, the modular package data is provided as a Module Type Package (MTP) file compliant with the AutomationML (AML) standard.

In an embodiment, the supplementary data includes at least one of process flow diagrams, mechanical properties of the assets, and chemical properties of the assets.

The method comprises processing, by the processing unit, the modular package data to extract at least the technical data, including input/output (I/O) signals, and asset-level attributes corresponding to each asset.

The method comprises processing, by the processing unit, hardware configuration data to identify signal assignments and control module interfaces associated with the assets.

The method comprises generating, by the processing unit, a behavioral model for each of the assets based on the modular package data and hardware configuration data.

The step of generating a behavioral model for each of the assets comprises retrieving a behavioral model template associated with each type of asset from the database, wherein the behavioral model template comprises at least an information related to functioning of the asset. Further, the step comprises mapping the modular package data and hardware configuration data of each asset to the behavioral model template corresponding to the type of asset, by populating the behavioral model template with instance-specific information corresponding to the asset.

In an embodiment, the behavioral model template is a mark-up language based template file containing placeholders for instance-specific information.

In an embodiment, the mapping includes dynamically replacing said placeholders with asset-specific attributes derived from the modular package data.

The method comprises integrating, by the processing unit, the behavioral models of the assets with each other in a simulation platform based on at least signal assignments of the assets to generate the digital simulation model of the technical installation.

The method comprises outputting, by the processing unit, the digital simulation model of the technical installation, wherein the digital simulation model replicates the operational behavior of the assets of the technical installation.

The method comprises prompting a user, via a graphical interface, to manually assign signals to I/O peripherals of the assets when automated deduction of signal assignments is unavailable.

The method comprises generating, by the processing unit, the behavioral model template for each type of asset, wherein the template file comprises placeholders for instance-specific information.

The method comprises simulating, in the simulation platform, the digital simulation model to virtually replicate the operation of the technical installation.

The method comprises converting, by the processing unit, modular package data formatted in a markup-based language into a hierarchical data structure via a tree-based representation. The method further comprises converting, by the processing unit, hardware configuration data formatted in a markup-based language into a hierarchical data structure via a tree-based representation.

The object of the present invention is achieved by a data processing device for generating digital simulation model of a technical installation. The data processing device comprises one or more processing units, and a memory communicatively coupled to the one or more processing units. The memory comprises a module stored in the form of machine-readable instructions executable by the one or more processing units, wherein the module is configured to perform the above method steps.

The object of the present invention is achieved by a system for generating digital simulation model of a technical installation. The system comprises a plurality of assets deployed in the technical installation, a data processing device configured for generating digital simulation model of a technical installation, and a communication network configured to communicatively connect the plurality of assets and the data processing device.

The object of the present invention is achieved by a computer-program product, having computer-readable instructions stored therein, that when executed by a processing unit, cause the processing unit to perform the above-mentioned method steps.

The object of the present invention is achieved by a computer readable medium on which program code sections of a computer program are saved, the program code sections being loadable into and/or executable in a system to make the system execute the above method steps.

The present invention is further described hereinafter with reference to illustrated embodiments shown in the accompanying drawings, in which:
- FIG 1: illustrates a system for generating a digital simulation model of a technical installation, in accordance with an embodiment of the present invention;
- FIG 2: illustrates an architecture of a data processing device, in accordance with an embodiment of the present invention;
- FIG 3: is a flowchart of a method for generating a digital simulation model of a technical installation, in accordance with an embodiment of the present invention; and
- FIG 4: illustrates the digital representation of an asset of the technical installation, in accordance with an embodiment of the present invention.

Hereinafter, embodiments for carrying out the present invention are described in detail. The various embodiments are described with reference to the drawings, wherein reference numerals are used to refer to like elements throughout. In the following description, for purpose of explanation, numerous specific details are set forth in order to provide a thorough understanding of one or more embodiments. It may be evident that such embodiments may be practiced without these specific details.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

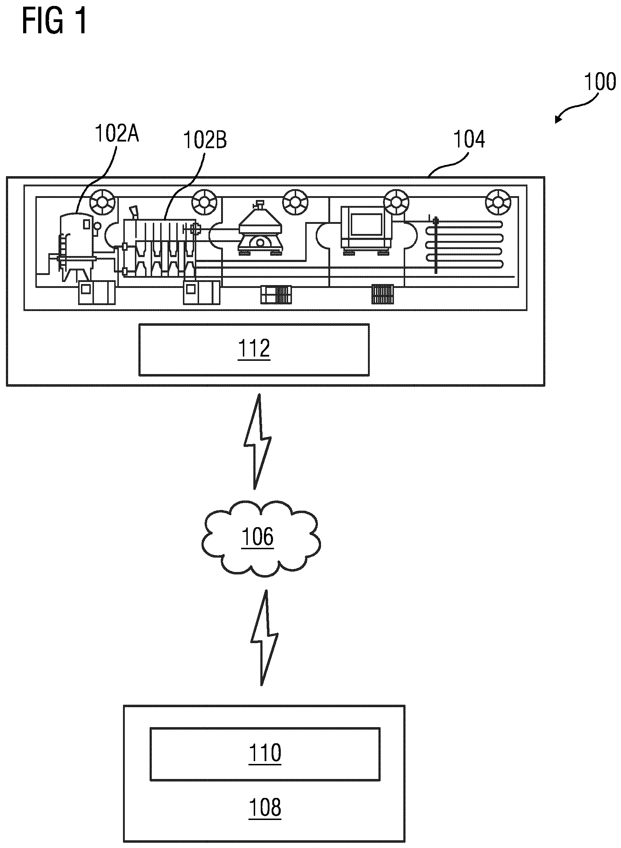

FIG. 1 illustrates a system 100 for generating a digital simulation model of a technical installation 104, in accordance with an embodiment of the present invention. The system 100 comprises a technical installation 104 comprising a plurality of assets (102a-n), a data processing device 108 configured to execute a simulation platform 110, and a communication network 106 configured to communicatively connect the technical installation 104 and the data processing device 108.

In an embodiment, the technical installation 104 relates to any industrial system, manufacturing system, or similar undertaking that involves the design, development, implementation, or optimization of technical and engineering solutions to address specific objectives.

The technical installation 104 comprises a plurality of assets (102a-n) enabling the technical installation 104 to achieve the desired outcomes. The assets (102a-n) may refer to any device, system, instrument, or machinery manufactured or used in an industry that may be employed for performing an operation. Examples of assets (102a-n) include reactors, chillers, heat exchangers, cooling towers, air compressors, boilers, and the like.

The technical installation 104 comprises sensors such as pressure sensors, and temperature sensors. The sensors are configured to obtain at least operational data or technical data associated with the asset (102a-n). For example, the sensor obtains the rpm of a motor, the sensor obtains the pressure inside a reactor so on and so forth. The sensors are configured to measure real-time operational parameters of the assets (102a-n), and the processes in the technical installation 104.

The technical installation 104 further comprises a control system 112, wherein the control system 112 is configured to regulate, monitor, and manage the operation of assets (102a-n) in the technical installation 104. The control system 112 includes Distributed Control System (DCS) and Supervisory Control and Data Acquisition (SCADA) systems configured to control the operations of the technical installation 104.

The data processing device 108 is configured to perform computer-executable instructions for generating a digital simulation model of the technical installation 104. The data processing device 108 is communicatively connected to the technical installation 104 for receiving data such as modular package data 218, hardware configuration data 220, and supplementary data 222 corresponding to the assets (102a-n) of the technical installation 104.

In an embodiment, the data processing device 108 may include general-purpose computing devices like desktop computers, laptops, and servers, as well as specialized hardware such as microcontrollers, embedded systems, digital signal processors (DSPs), application-specific integrated circuits (ASICs), and field-programmable gate arrays (FPGAs).

The communication network 106 may include, but are not limited to, any one or more different types of networks such as, for example, cable networks, public networks (e.g., the Internet), private networks (e.g., frame-relay networks), wireless networks, cellular networks, telephone networks (e.g., a public switched telephone network), cloud based networks, or any other suitable private or public packet switched or circuit switched networks. Such network(s) may have any suitable communication range associated therewith and may include, for example, global networks (e.g., the Internet), metropolitan area networks (MANs), wide area networks (WANs), local area networks (LANs), or personal area networks (PANs).

The simulation platform 110 is an application executed on a data processing device 108, designed to facilitate the simulation and analysis of the technical installation 104. The platform tool that enables users to model, test, and evaluate various operational scenarios, configurations, and performance characteristics of the technical installation 104 in a virtual environment. Furthermore, the simulation platform 110 may include features such as user interfaces, visualization tools, and customizable parameters to enhance usability and adaptability across different technical domains.

The data processing device 108 processing device generates the digital simulation model of the technical installation 104 using the module package data associated with the assets (102a-n). The data processing device 108 receives input data comprising modular package data 218, hardware configuration data 220, and supplementary data 222 corresponding to the assets (102an) of the technical installation 104. Further, the data processing device 108 generates a behavioral model for each asset (102a-n) by mapping the processed input data against the behavioral model template corresponding to each asset (102a-n). The behavioral models of all the assets (102a-n) are integrated into the simulation platform 110 to generate the digital simulation model of the technical installation 104.

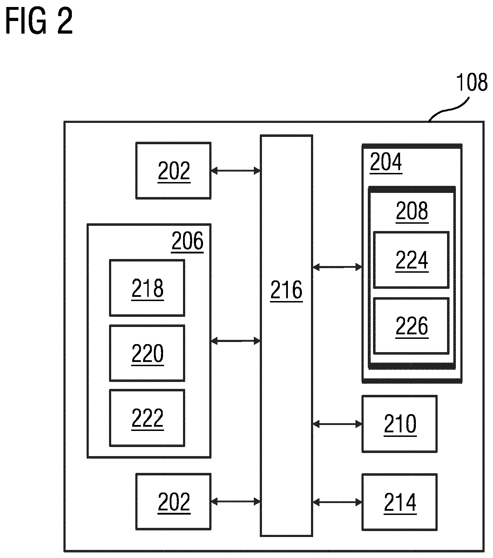

FIG. 2 illustrates an architecture of a data processing device 108, in accordance with an embodiment of the present invention. The data processing device 108 comprises a processing unit 202, a memory 204 comprising modules 208 including a mapping module 224, and a transformation module 226, a database 206, a network interface 210, an input unit 212, an output unit 214, and a bus 216.

The memory 204 may include volatile memory (memory that maintains its state when supplied with power) such as random access memory (RAM) and/or non-volatile memory (memory that maintains its state even when not supplied with power) such as read-only memory (ROM), flash memory, ferroelectric RAM (FRAM), and so forth. Persistent data storage, as that term is used herein, may include non-volatile memory. In certain example embodiments, volatile memory may enable faster read/write access than non-volatile memory. However, in certain other example embodiments, certain types of non-volatile memory (e.g., FRAM) may enable faster read/write access than certain types of volatile memory. In certain example, the database may be equivalent to the memory. In various implementations, the memory may include multiple different types of memory such as various types of static random access memory (SRAM), various types of dynamic random access memory (DRAM), various types of unalterable ROM, and/or writeable variants of ROM such as electrically erasable programmable read-only memory (EEPROM), flash memory, and so forth. The memory may include main memory as well as various forms of cache memory such as instruction cache(s), data cache(s), translation lookaside buffer(s) (TLBs), and so forth. Further, cache memory such as a data cache may be a multi-level cache organized as a hierarchy of one or more cache levels (LI, L2, etc.).

The memory 204 may include modules 208 such as the mapping module 224 and the transformation module 226 stored in the form of machine-readable instructions executable by the one or more processing unit 202. The mapping module is configured to retrieve a behavioral model template associated with each type of asset (102a-n) from the database 206 and map the modular package data 218 and hardware configuration data 220 of each asset (102a-n) to the behavioral model template corresponding to the type of asset (102a-n). Therefore, the mapping module enables generating the behavioral model for each of the assets of the technical installation.

Further, the transformation module 226 is configured to convert data from one format to another format. Specifically, in an embodiment, the transformation module 226 converts the modular package data 218 formatted in a markup-based language into a hierarchical data structure via a tree-based representation. Further, the transformation module 226 converts the hardware configuration data 220 formatted in a markup-based language into a hierarchical data structure via a tree-based representation.

The database 206 may include removable storage and/or non-removable storage including, but not limited to, magnetic storage, optical disk storage, and/or tape storage. The database 206 may provide non-volatile storage of computer-executable instructions and other data.

The database 206 may store computer-executable code, instructions, or the like that may be loadable into the memory and executable by the processing unit 202 to cause the processing unit 202 to perform or initiate various operations such as generating a digital simulation model of the technical installation 104 based on the module package data. The database may store relevant data that may be copied to memory for use by the processing unit 202 during the execution of the computer-executable instructions. Moreover, output data generated as a result of execution of the computer-executable instructions by the processing unit 202 may be stored initially in memory and may ultimately be copied to the database for non-volatile storage.

More specifically, the database 206 is configured to access the memory; and one or more program module, applications, engines, managers, computer-executable code, scripts, or the like such as, for example, the various modules of the memory. Any of the components depicted as being stored in the database may include any combination of software, firmware, and/or hardware. The software and/or firmware may include computer-executable instructions (e.g., computer-executable program code) that may be loaded into the memory for execution by one or more of the processing units 202 to perform any of the corresponding operations described earlier.

In an embodiment, the database 206 may store the input data comprising modular package data 218, hardware configuration data 220, and supplementary data 222 corresponding to each of the assets (102a-n) of the technical installation 104.

The processing unit 202 may be configured to access the memory and execute computer-executable instructions loaded therein. For example, the processing unit 202 may be configured to execute computer-executable instructions of the various program module, applications, engines, managers, or the like to cause or facilitate various operations to be performed in accordance with one or more embodiments of the disclosure. The processing unit 202 may include any suitable processing unit 202 capable of accepting data as input, processing the input data in accordance with stored computer-executable instructions, and generating output data. The processing unit 202 may include any type of suitable processing unit 202 including, but not limited to, a central processing unit 202, a microprocessor, a Reduced Instruction Set Computer (RISC) microprocessor, a Complex Instruction Set Computer (CISC) microprocessor, a microcontroller 104, an Application Specific Integrated Circuit (ASIC), a Field-Programmable Gate Array (FPGA), a System-on-a-Chip (SoC), a digital signal processor (DSP), and so forth. Further, the processing unit 202 may have any suitable microarchitecture design that includes any number of constituent components such as, for example, registers, multiplexers, arithmetic logic units, cache controllers for controlling read/write operations to cache memory, branch predictors, or the like. The microarchitecture design of the processing unit 202 may be capable of supporting any of a variety of instruction sets.

The processing unit 202 is configured to receive the input data, wherein the input data comprises modular package data 218, hardware configuration data 220, and supplementary data 222 corresponding to each of the assets (102a-n) of the technical installation 104. The modular package data 218 includes standardized technical configuration data that defines the functional aspects of the assets (102a-n). Examples of standardized technical configuration data include device-specific information, communication settings, including protocol configurations, control logic, and data related to integration of the assets (102a-n) in the technical installation 104.

In an embodiment, the modular package data 218 is provided as a Module Type Package (MTP) file compliant with the AutomationML (AML) standard.

The hardware configuration data 220 includes data that defines the relationship between the assets (102a-n), input/output configurations, and interoperability of assets (102a-n) in the technical installation 104. The hardware configuration data 220 is obtained from the control system 112 of the technical installation 104.

The supplementary data 222 includes at least the operational data, and the technical data associated with the asset (102a-n). The supplementary data 222 may be obtained from the database comprising process flow diagrams, technical specification sheets, instrumentation diagrams so on and so forth.

The processing unit 202 processes the input data to extract information from the modular package data 218, the hardware configuration data 220, and the supplementary data 222. The processing unit 202 further generates a behavioral model for each of the assets (102a-n) by mapping the processed modular package data 218 and hardware configuration data 220 of the corresponding type of asset (102a-n) to the behavioral model template corresponding to the asset (102a-n).

The processing unit 202 integrates the behavioral models of the assets (102a-n) with each other based on the input data to generate a digital simulation model of the technical installation 104. The digital simulation model of the technical installation 104 is simulated in the simulation platform 110 to virtually replicate the operation of the technical installation 104.

The input unit 212 and the output unit 214 may facilitate the receipt of input information by the various modules from one or more I/O devices as well as the output of information from the modules to the one or more I/O devices. The I/O devices may include any of a variety of components such as a display or a display screen having a touch surface or a touchscreen; an audio output device for producing sound, such as a speaker; an audio capture device, such as a microphone; an image and/or video capture device, such as a camera; a haptic unit; and so forth. The I/O devices may further include, for example, any number of peripheral devices such as data storage devices, printing devices, and so forth.

The network interface 210 may include communication links and associated networking devices (e.g., link-layer switches, routers, etc.) for transmitting network traffic over any suitable type of medium including, but not limited to, coaxial cable, twisted-pair wire (e.g., twisted-pair copper wire), optical fiber, a hybrid fiber-coaxial (HFC) medium, a microwave medium, a radio frequency communication medium, a satellite communication medium, or any combination thereof.

The bus 216 may include at least one of a system bus, a memory bus, an address bus, or a message bus, and may permit the exchange of information (e.g., data (including computer-executable code), signaling, etc.) between various components of the data processing device 108. The bus may include, without limitation, a memory bus or a memory controller, a peripheral bus, an accelerated graphics port, and so forth.

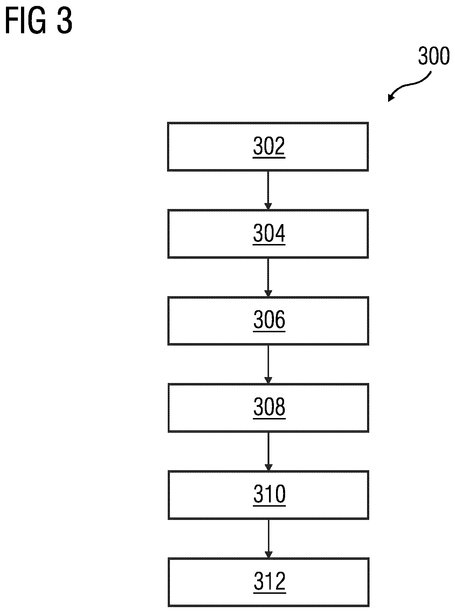

FIG. 3 is a flowchart of a method 300 for generating a digital simulation model of a technical installation 104, in accordance with an embodiment of the present invention. At step 302, the processing unit 202 receives the input data comprising modular package data 218, hardware configuration data 220, and supplementary data 222.

The modular package data 218 includes standardized technical configuration data that defines the functional aspects of the assets (102a-n). Examples of standardized technical configuration data include device-specific information, communication settings, including protocol configurations, control logic, and data related to integration of the assets (102a-n) in the technical installation 104. In an embodiment, the processing unit 202 receives the modular package data 218 associated with one or more assets (102a-n) of the technical installation 104 obtained from the one or more assets (102a-n).

The hardware configuration data 220 includes data that defines the relationship between the assets (102a-n), input/output configurations, and interoperability of assets (102a-n) in the technical installation 104. In an embodiment, the hardware configuration data 220 is obtained from the control system 112 configured to control the operations of the technical installation 104.

The supplementary data 222 includes at least the operational data, and the technical data associated with the asset (102a-n). The supplementary data 222 may be obtained from the database comprising process flow diagrams, technical specification sheets, instrumentation diagrams so on and so forth. In an embodiment, the processing unit 202 may analyze the process flow diagrams, technical specification sheets and the like to extract the supplementary data 222.

At step 304, the processing unit 202 processes the modular package data 218 to extract at least technical data corresponding to each asset (102a-n). The technical data may include input/output (I/O) signals, and asset-level attributes of the asset (102a-n).

In an embodiment, the processing unit 202 extracts the contents of the modular package data 218 in the MTP file. Since MTP files often contain structured data (e.g., XML or AML), the extraction step involves unpacking compressed files, reading structured data, or parsing the contents.

Further, the AML or XML data of the MTP file is converted to a hierarchical tree structure, wherein the hierarchical tree structure allows easy traversal, manipulation, and querying of XML elements.

Further, the hierarchical tree structure of the modular package data 218 is converted to a JSON file for easier processing. The JSON file comprises the modular package data 218 of the asset (102a-n), wherein the modular package data 218 includes technical configuration data as described earlier.

At step 306, the processing unit 202 processes the hardware configuration data 220 to identify signal assignments and control module interfaces associated with the assets (102a-n). The hardware configuration data 220 enables in accurate assignment of signals of the assets (102an) with each other to generate the digital simulation model of the technical installation 104.

In an embodiment, the hardware configuration file is an XML file containing information about the hardware setup of the assets (102a-n). The processing unit 202 converts the XML data to a hierarchical tree structure, wherein the hierarchical tree structure allows easy traversal, manipulation, and querying of XML elements.

Further, the hierarchical tree structure of the hardware configuration data 220 is converted to a JSON file.

At step 308, the processing unit 202 generates behavioral model for each of the assets (102a-n) based on the input data received by the processing unit 202. The behavioral model is a digital representation of an asset (102a-n) that defines how an asset (102a-n) operates under certain conditions, how it responds to inputs (e.g., signals, data), and how it interacts with other assets (102a-n) in the technical installation 104.

Firstly, the processing unit 202 retrieves a behavioral model template associated with each type of asset (102a-n) from the database. The behavioral model template comprises at least an information related to functioning of the asset (102a-n). Each type of asset (102a-n) has a behavioral model template associated with it. For example, pressure valve is one type of an asset (102a-n), and the database comprises a behavioral model template corresponding to the pressure valve. The processing unit 202 may identify the type of the asset (102a-n) and accordingly retrieve the behavioral model template corresponding to the type of the asset (102a-n).

In an embodiment, the behavioral model template is a mark-up language based template file containing placeholders for instance-specific information.

In an embodiment, the processing unit 202 generates the behavioral model template for each type of asset (102a-n), wherein the template file comprises placeholders for instance-specific information. The behavioral model template file is reusable for assets (102a-n) of the same type.

Further, the processing unit 202 maps processed modular package data 218 and hardware configuration data 220 of each asset (102a-n) to the behavioral model template corresponding to the type of asset (102a-n). Further, the behavioral model template is populated with instance-specific information corresponding to the asset (102a-n).

In an embodiment, the mapping includes dynamically replacing said placeholders with asset-specific attributes derived from the modular package data 218.

In one embodiment, the processing unit 202 uses information such as ConnectionlD for mapping the input data of the asset (102a-n) with the corresponding behavioral model template of the asset (102a-n).

In an embodiment, the supplementary data 222, the JSON file of the modular package data 218, and the JSON file of the hardware configuration data 220 are used to generate the behavioral model of an asset (102a-n) in XML format.

In an embodiment, the user provides the asset (102a-n) information as an input to the data processing device 108, wherein the asset (102a-n) information may comprise at least an information related to the type of asset (102a-n), and instant-specific information of the asset (102a-n).

At step 310, the processing unit 202 integrates the behavioral models of the assets (102a-n) based on the input data received. The behavioral models of the assets (102a-n) are integrated with each other to generate a digital simulation model of the technical installation 104. The signal assignment data of the assets (102a-n) is utilized to integrate the behavioral models of the assets (102a-n) as per the technical installation 104.

In an embodiment, the user is prompted, via a graphical interface, to manually assign signals to I/O peripherals of the assets (102a-n) when automated deduction of signal assignments is unavailable.

The generated digital simulation model of the technical installation (104) is outputted by the processing unit (202). The digital simulation model is a digital replica that replicates the operational behavior of the assets (102a-n) of the technical installation.

At step 312, the processing unit 202 simulates the digital simulation model of the technical installation 104 in the simulation platform 110. The simulation of the digital simulation model of the technical installation 104 virtually replicates the operation of the technical installation 104.

The user may simulate the digital simulation model of the technical installation for different operating conditions and for different combinations of assets thereby enabling the user to identify the optimum asset configuration and operational parameters for operating the technical installation.

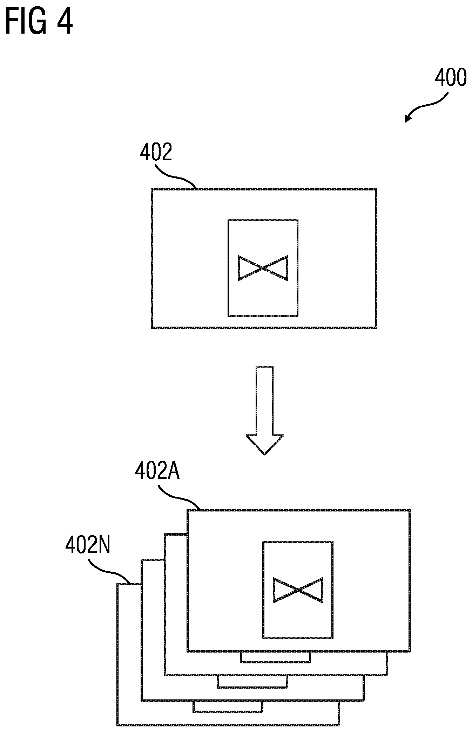

FIG.4 illustrates the digital representation 400 of an asset (102a-n) of the technical installation 104, in accordance with an embodiment of the present invention. The behavioral model template 402 corresponding to a type of asset (102a-n) is created by the processing unit 202. Further, in an embodiment, the behavioral model template 402 may be stored in the database and retrieved by the processing unit 202.

The processing unit 202 retrieves the behavioral model template 402 corresponding to an asset (102a-n) from the database 206. The processing unit 202 further creates multiple behavioral models (402a-n) for the assets (102a-n) corresponding to multiple instances of the assets (102an).

The processing unit 202 further integrates the behavioral models (402a-n) of the assets (102an) based on the signal assignment data to generate a digital simulation model of the technical installation 104.

The method enables significant reduction in engineering effort by minimizing the manual steps required to create simulation models. Users only need to perform a few simple actions to generate automatic simulation models, streamlining the process and reducing complexity. This also leads to a substantial reduction in the time required for simulation model creation, allowing faster development and validation processes compared to conventional manual methods.

The method enhances flexibility for users by allowing validation of various OEM selection possibilities. Users can simulate and test multiple configurations or alternatives, ensuring optimal decision-making during process design and validation. By leveraging the scalable "template instance" mechanism of the simulation platform, the method ensures adaptability across diverse asset models and configurations. The efficient utilization of MTP data models, combined with scalable simulation tools, enables precise arrangement and extraction of instance-specific data and parameters, ensuring accurate and efficient model creation while adhering to MTP standards.

The automation and standardization provided by the method lead to significant cost savings for automation projects. Reduced engineering efforts, faster model creation, and minimal reliance on OEMs collectively optimize resources and reduce expenses associated with simulation model development. Furthermore, the method improves automation workflows by streamlining the transition from project data acquisition to simulation model creation, enhancing overall productivity. The use of MTP-compliant behavior model templates ensures standardized and consistent simulation model generation across various projects, reducing errors and improving reliability.

While the invention has been illustrated and described in detail with the help of a preferred embodiment, the invention is not limited to the disclosed examples. Other variations can be deducted by those skilled in the art without leaving the scope of protection of the claimed invention.

### List of references

100 - system for generating a digital simulation model of a technical installation
102a-n - Assets
104 - Technical installation
106 - Communication network
108 - Data processing device
110 - Simulation platform
112 - Control system
202 - Processing unit
204 - Memory
206 - Database
208 - Modules
210 - Network interface
212 - Input unit
214 - Output unit
216 - Bus
218 - modular package data
220 - hardware configuration data
222 - Supplementary data
300 - flowchart of a method for generating a digital simulation model of a technical installation
400 - digital representation of an asset of the technical installation
402 - behavioral model template of an asset
402a-n - behavioral model of assets

## Claims

1. A computer-implemented method for generating a digital simulation model of a technical installation (104), comprising:
receiving, by a processing unit (202), input data comprising:
modular package data (218) associated with one or more assets (102a-n) of the technical installation (104) obtained from the one or more assets (102a-n);
hardware configuration data (220) defining the relationship between the assets (102a-n) obtained from a control system configured to control the operations of the assets (102a-n); and
supplementary data including at least operational data and technical data associated with the asset (102a-n) obtained at least from a database (206);
processing, by the processing unit (202), the modular package data (218) to extract at least the technical data, including input/output (I/O) signals, and asset-level attributes corresponding to each asset;
processing, by the processing unit (202), hardware configuration data (220) to identify signal assignments and control module interfaces associated with the assets (102a-n);
generating, by the processing unit (202), a behavioral model for each of the assets (102an) based on the input data received by the processing unit (202);
integrating, by the processing unit (202), the behavioral models of the assets (102a-n) with each other in a simulation platform (110) based on at least signal assignments of the assets (102a-n) to generate the digital simulation model of the technical installation (104); and
outputting, by the processing unit (202), the digital simulation model of the technical installation (104), wherein the digital simulation model replicates the operational behavior of the assets (102a-n) of the technical installation (104).

2. The method according to claim 1, wherein:
the modular package data (218) is provided as a Module Type Package (MTP) file compliant with the AutomationML (AML) standard; and
the supplementary data includes at least one of process flow diagrams, mechanical properties of the assets (102a-n), and chemical properties of the assets (102a-n).

3. The method according to any of the preceding claims, wherein:
the behavioral model template is a mark-up language based template file containing placeholders for instance-specific information; and
the mapping includes dynamically replacing said placeholders with asset-specific attributes derived from the modular package data (218).

4. The method according to any of the preceding claims further comprises:
prompting a user, via a graphical interface, to manually assign signals to I/O peripherals of the assets (102a-n) when automated deduction of signal assignments is unavailable.

5. The method according to any of the preceding claims, wherein the method comprises:
generating, by the processing unit (202), the behavioral model template for each type of asset (102a-n), wherein the template file comprises placeholders for instance-specific information.

6. The method according to any of the preceding claims, wherein the method comprises:
simulating, in the simulation platform (110), the digital simulation model to virtually replicate the operation of the technical installation (104).

7. The method according to any of the preceding claims, wherein the method comprises:
converting, by the processing unit (202), modular package data (218) formatted in a markup-based language into a hierarchical data structure via a tree-based representation; and
converting, by the processing unit (202), hardware configuration data (220) formatted in a markup-based language into a hierarchical data structure via a tree-based representation.

8. The method according to any of the preceding claims, wherein the step of generating a behavioral model for each of the assets (102a-n) comprises:
retrieving a behavioral model template associated with each type of asset (102a-n) from the database (206), wherein the behavioral model template comprises at least an information related to functioning of the asset; and
mapping the modular package data (218) and hardware configuration data (220) of each asset (102a-n) to the behavioral model template corresponding to the type of asset (102an), by populating the behavioral model template with instance-specific information corresponding to the asset (102a-n).

9. A data processing device (108) for generating digital simulation model of a technical installation (104) comprising:
one or more processing units (202); and
a memory communicatively coupled to the one or more processing units (202), the memory comprising a module stored in the form of machine-readable instructions executable by the one or more processing units (202), wherein the module is configured to perform the method steps according to claims 1 to 8.

10. A system for generating digital simulation model of a technical installation (104), wherein the system comprises:
a plurality of assets (102a-n) deployed in the technical installation (104);
a data processing device (108) according to claim 9 configured for generating digital simulation model of a technical installation (104); and
a communication network (106) configured to communicatively connect the plurality of assets (102a-n) and the data processing device (108).

11. A computer program product comprising machine-readable instructions stored therein that, when executed by one or more processing units (202), cause the one or more processing unit (202) to perform a method according to any of the claims 1-8.
